# EUROPEAN PATENT APPLICATION

(11) **EP 4 635 831 A1**
(43) Date of publication of application: **22.10.2025**
(21) Application number: 25171291.5
(22) Date of filing: 17.04.2025
(51) Int. Cl.: B62D 51/00

(54) **ADJUSTABLE OPERATING ARM FOR MOBILE WORKING MACHINE**

(30) Priority: 17.04.2024 CH 4042024
(71) Applicant: novaziun AG, 7144 Vella (CH)
(72) Inventor: BERNOLD, Nicolas Fabian, 8055 Zürich (CH); CADUFF, Gian, 7142 Cumbel (CH); SANGKLIN, Marco, 4900 Langenthal (CH); VINCENZ, Daniel, 7144 Vella (CH)
(74) Representative: Frei Patent Attorneys

(57) **Abstract**

Disclosed is a mobile working machine (1) comprising an operating arm comprising: a proximal member (21) attached to the mobile working machine (1), a distal member (23) attached to an operating unit (3) for the mobile working machine (1), a link member arranged between the proximal member (21) and the distal member (23), rotatably connected to the proximal member (21) by a proximal joint (211) and the distal member (23) by a distal joint (231), and a coordination mechanism (4) configured such that the rotation of the proximal member (21) with respect to the link member around the proximal joint (211) and the rotation of the distal member (23) with respect to the link member around the distal joint (231) are coordinated to each other..

## Description

### FIELD OF THE DISCLOSURE

The present invention relates to an adjustable operating arm for mobile working machine, in particular a single-axle tractor.

### BACKGROUND OF THE DISCLOSURE

Single-axle tractors are a type of small tractor carried on a pair of wheels, typically used for horticultural, agricultural, communal, industry, landscaping, farm and home work. They are arranged to push and/or pull auxiliary equipment. An operator usually walks behind the single-axle tractor, gripping a pair of handles to steer and/or otherwise control the single-axle tractor. The operator may also, at times, for some tractors, stand on a small platform at the rear of the tractor.

Auxiliary equipment may be attached to the front and/or the rear of the tractor. Single-axle tractors may have permanently attached auxiliary equipment, or may have one or more interfaces allowing for the attachment and removal of different auxiliary equipment. A considerable range of auxiliary equipment has been developed for use with single-axle tractors, including plows, hoes, cultivators, hay balers, hay rakes, rototillers, cutter bars, mowers, sweepers, snow blowers, snow ploughs, harrows, mulchers, weed brushes, and so on. The interface provides for a mechanical connection to the auxiliary equipment, (i.e. for fixing of the auxiliary equipment to the tractor and optionally for supporting at least part of the weight of the auxiliary equipment). The interface typically also includes a driveline connector such that the tractor can drive the auxiliary equipment.

The single-axle tractor is controlled by means of an operating unit connected to the main body of the tractor by way of an operating arm, stem, bar, or other connecting member.

Smaller single-axle walk behind tractors are known in which the arm is immovable and the operator may steer the single-axle tractor by way of using the operating unit to directly move the tractor. Other arms are known which may be pivoted about the main body, such that the operator can walk diagonally behind, instead of directly behind the tractor, depending on the current use of the tractor or need.

However, these known arms all have one or more disadvantages, in that they are not optimally suitable for all use-cases or modes of operating the tractor, in particular all types of auxiliary equipment which may be attached to the tractor.

### SUMMARY OF THE DISCLOSURE

It is an object of embodiments disclosed herein to provide an adjustable operating arm for a mobile working machine. In particular, it is an object of the embodiments disclosed herein to provide an adjustable operating arm for a mobile working machine which does not have at least some of the disadvantages of the prior art.

According to the present disclosure, a mobile working machine comprises an operating arm. The operating arm comprises a proximal member attached to the mobile working machine. The operating arm comprises a distal member attached to an operating unit for the mobile working machine. The operating arm comprises a link member arranged between the proximal member and the distal member. The link member is rotatably connected to the proximal member by a proximal joint and the link member is rotatably connected the distal member by a distal joint. The operating arm comprises a coordination mechanism configured such that the rotation of the proximal member with respect to the link member around the proximal joint and the rotation of the distal member with respect to the link member around the distal joint are coordinated to each other.

The mobile working machine may in particular be embodied as a single-axle tractor. The mobile working machine may be adaptable to performing different tasks by attaching different types of auxiliary equipment to the mobile working machine. The mobile working machine is in particular operated by a human operator who walks beside the mobile working machine during operation. The mobile working machine may include a pedestal such that the human operator may stand on the pedestal during operation and be carried by the mobile working machine.

The mobile working machine is operated by the operator using the operating unit, which may comprise handles, input mechanisms (e.g., including twistgrip handles, levers, joy-sticks, buttons, switches), and output mechanisms (e.g., a display unit).

The coordination mechanism is preferably configured such that the rotation of the proximal and distal joints are coordinated such that the angle between the proximal and distal member remains constant (e.g. the proximal and distal members remain oriented in parallel or at another defined angle to each other).

In an embodiment, the operating arm further comprises a locking mechanism to temporarily lock the proximal member about the proximal joint and the rotation of the distal member about the distal joint is lockable in several angular positions.

In an embodiment, the coordination mechanism includes a force accumulator configured to compensate at least partially a weight that the operating unit transfers to a user during operation. The force accumulator may be implemented as a gas spring, coil spring, etc. The force accumulator makes it easier to adjust the operating arm because, during adjustment (i.e., while the locking mechanism is unlocked), the operating unit and the operating arm is at least partly supported by the force accumulator, such that the operator does not need to bear the full weight of the operating unit and operating arm.

In an embodiment, the coordination mechanism comprises a drive mechanism connected to the proximal member and the distal member, the drive mechanism configured to transfer torque about the link member between the proximal member and the distal member.

In an embodiment, the coordination mechanism comprises one or more electric actuators (e.g., electric motors). The electric actuator(s) may be connected to the first and/or second joint. The electric actuator(s) may be connected across the first and/or second joint. For example, the first actuator may be connected to both the proximal member and the link member at a distance from the proximal joint, and the second actuator may be connected to both the link member and the distal member at a distance from the distal joint. The electric actuator(s) are configured to coordinate movement about the joints, in particular such that both joints move simultaneously and preferably at the same rate, for example such that a change of angle of a given angular distance about one joint results in the same change of angle (same angular distance) about the other joint. The electric actuator(s) may be configured not only as actuators but also as generators, such that electric energy generated through movement about a first joint is transferred from a first electric actuator acting as a generator to the second electric actuator, thereby providing at least some of the power required to actuate the second actuator. The electric actuators may further comprise one or more sensors configured to indirectly and/or directly sense a movement about the first and/or second joint, for example by sensing an angular position and/or by sensing a torque about the joint(s). The sensors are connected to the electric actuators and control electronics provided, the control electronics configured to coordinate the movement about the joints.

The first and/or second electric actuators may be implemented as stepper motors (e.g., a rotational stepper motor or a linear stepper motor).

In an embodiment, the traction drive extends on the outside or on the inside along the link member interconnecting the proximal gear and the distal gear.

In an embodiment, the traction drive is arranged entirely outside (in particular alongside) the link member.

In an embodiment, the link member at least partially defines an enclosure and the traction drive is at least partially arranged inside the enclosure. The enclosure may be in the form of a box like structure. The enclosure can be entirely separate from a structural component of the link member and may not contribute to the structure (i.e. may not be a load carrying part) of the link member. The enclosure may provide at least part of the structural support of the link member.

In an embodiment, the link member includes a beam extending between a first end of the link member and a second end of the link member. The beam may at least partially define the enclosure. The beam may have an O shaped profile, U shaped profile, I shaped profile, etc. The link member may be formed of bent sheet metal, may be an extruded profile, etc. The link member may comprise a plurality of joined segments, each having a different profile. The link member may further comprise a housing or box-like structure configured to at least partially define the enclosure.

In an embodiment, the distal joint has a distal rotation axis and the proximal joint has a proximal rotation axis, the distal rotation axis and the proximal rotation axis arranged parallel to each other.

In an embodiment, the coordination mechanism comprises a traction drive, in particular force-locking and/or positive locking traction drives, in particular chain drives or toothed belt drives.

The proximal member and the distal member may each comprise a gear (e.g., bevel gear) and the drive mechanism comprises a transmission shaft configured to engage with each of the gears.

In an embodiment, the traction drive comprises a proximal gear attached to the proximal member and a distal gear attached to the distal member, the proximal gear and the distal gear interconnected to each other by the traction drive.

In an embodiment, the locking mechanism comprises a handle movable between an unlocked position and a locked position, the handle configured to engage with the locking mechanism to set the locking mechanism in the unlocked setting and the locked setting, respectively.

The handle may be configured such that it has two stable positions, i.e. such that the handle can move from the unlocked setting to the locked setting (and vice versa) only when actuated by the operator. In particular, the locked position is stable in that there is provided a handle biasing mechanism connected to the handle which, up to a particular degree of handle actuation between the two stable positions, biases the handle towards the stable position. In other words, the biasing mechanism is configured such that there exists an unstable equilibrium (also referred to as a "dead point") between the two stable positions.

The same biasing mechanism may bias the handle such that it returns to the locked position if it is not moved beyond the position of unstable equilibrium.

In an embodiment, the locking mechanism is be cable actuated, the cable extending to the operating unit of the mobile working machine. Thereby, the operating arm may be controlled via a control element, e.g. a handle or lever, attached to the operating unit.

In an embodiment, one or more motors, e.g. electric motors, may be provided for controlling/driving the locking mechanism. For example, if the locking mechanism is cable actuated, a single motor may drive the cable. Alternatively, two separate motors may drive the locking mechanism, in particular by locking both of the joints.

In an embodiment, the locking mechanism comprises a coupling configured to lock the rotation of the proximal member with respect to the link member and/or configured to lock the rotation of the proximal member with respect to the link member.

The coupling may include a ratchet mechanism. There may be a first and a second coupling arranged at the proximal and distal joint, respectively.

The coupling(s) may be in the form of a clutch. The clutch may be a dry clutch, dog clutch (i.e. with engaging elements, such as splines, arranged axially and/or radially). The coupling may be electrically controlled or driven by means of an electric motor or other type of actuator.

In an embodiment, the locking mechanism coordinates the action of the first and the second coupling using a coupling drive connected to the handle. The coupling drive may be implemented as one or more rods, chains, or cables connected to the handle, which rod(s) simultaneously engage and/or disengage the coupling, for example by bringing the clutch into engagement. The coupling drive may also be implemented using one or more electric motors or actuators.

In an embodiment, the proximal member comprises a swivel and a base section such that the proximal member, when attached to the mobile working machine, may be swiveled through a defined angular range of at least 180°, preferably 270°, more preferably 360°.

In an embodiment, the operating arm further comprises electrical cabling for controlling the mobile working machine is arranged at least partially inside the operating arm, in particular wherein the electrical cabling runs along the inside of the link member.

### BRIEF DESCRIPTION OF THE DRAWINGS

The herein described disclosure will be more fully understood from the detailed description given herein below and the accompanying drawings which should not be considered limiting to the invention described in the appended claims. The drawings in which:
- Fig. 1: shows a perspective view of a schematic drawing of a mobile working machine including an operating arm and an operating unit according to an embodiment of the disclosure, wherein the operating arm is in a fully retracted configuration;
- Fig. 2: shows a side view of a schematic drawing of the mobile working machine of Fig. 1;
- Fig. 3: shows a front view of a schematic drawing of the mobile working machine of Fig. 1;
- Fig. 4: shows a perspective view of a schematic drawing of an operating arm in the retracted configuration according to an embodiment;
- Fig. 5: shows the perspective view of Fig. 4 without the housing on the link member shown;
- Fig. 6: shows a perspective view of a schematic drawing of an operating arm in the extended configuration according to an embodiment;
- Fig. 7: shows the perspective view of Fig. 6 without the housing on the link member shown;
- Fig. 8: shows a perspective view of a schematic drawing proximal member; and
- Fig. 9: shows an exploded perspective view of a schematic drawing of a link member.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts. For the sake of improved clarity in the drawings, where multiple of the same features are shown, not all instances of the same features may be labeled with reference numbers to reduce clutter.

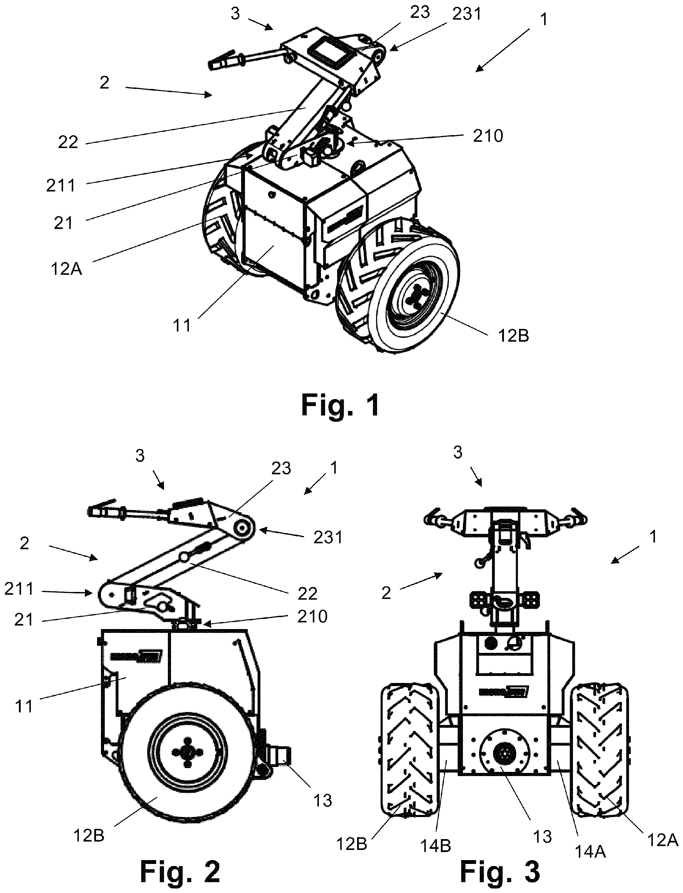

**Fig. 1** shows a perspective view of a schematic drawing of a mobile working machine 1 according to an embodiment of the disclosure. In particular, the mobile working machine 1 is implemented as a single axle tractor.

The mobile working machine 1 comprises a main body 11, two wheels 12A, 12B arranged on opposing lateral sides of the main body 11, an operating arm 2 attached to a top side of the main body 11, and an auxiliary equipment coupling 13 (shown in Figs. 2 and 3) arranged on a front side of the main body 11.

The main body 11 has an overall substantially cuboid shape. The main body 11 houses an battery compartment designed to receive batteries for powering two electric motors arranged on the lateral sides of the main body 11, the electric motors 14A, 14B (shown in Fig. 3) connected to the two wheels 12A, 12B, respectively. The two wheels 12A, 12B are arranged such that their central axes coincide.

The main body 11 further comprises power and control electronics for controlling the mobile working machine 1 and may include a motor for powering auxiliary equipment attached to the mobile working machine 1 by way of the auxiliary equipment coupling 13.

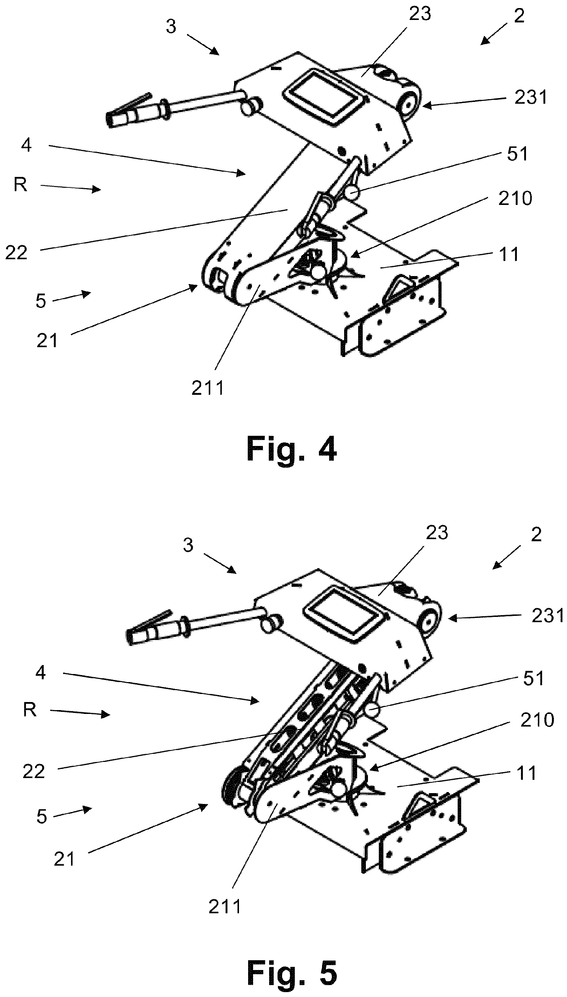

The operating arm 2, which is described in more detail with reference to **Figs. 4** to **9****,** is shown in the retracted configuration R and comprises a proximal member 21 which is rotatably connected to the main body 11. In particular, the proximal member is arranged on a swivel 210 which is configured to allow the proximal member to swivel about a vertical axis on the main body 11, preferably by up to 120 degrees, more preferably up to 180 degrees in each direction. Thereby, the operating arm 2 need not always be positioned behind the mobile working machine 1, but can be swiveled according to the requirements of the task to be performed.

The structure of the operating arm 2 is preferably made of metal, in particular bent sheet metal, from which the individual sections may be readily manufactured and assembled.

The operating arm 2 comprises a link member 22 which is rotatably connected to the proximal member 21 by a proximal joint 211. The operating arm 2 comprises a distal member 23 which is rotatably connected to the link member 22 by a distal joint 231.

The operating arm 2, in particular the distal member 23, is connected to an operating unit 3. The operating unit 3 comprises two handles, operating elements and a display unit. The operating unit 3 is connected to the main body.

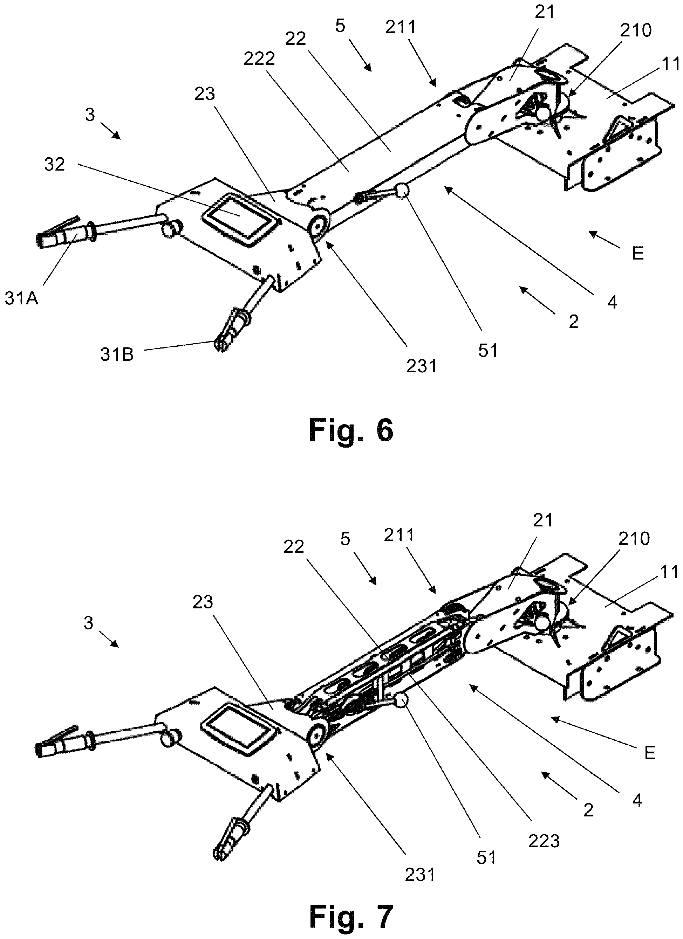

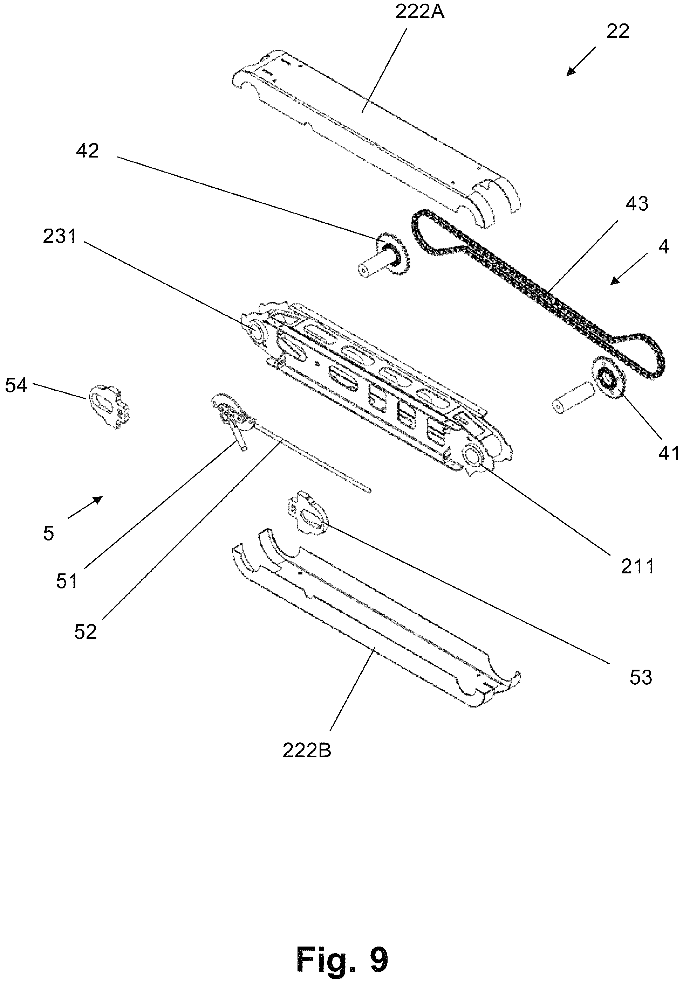

As described below in more detail, the operating arm 2 comprises a coordination mechanism 4 arranged inside the operating arm 2, such that the movement about the joints 211, 231 is coordinated to allow for simpler reconfiguration of the operating arm 2 between the retracted position R (shown) and the extended position E (shown in Figs. 6 and 7) and various discrete and/or continuously defined positions there between. The coordination mechanism 4 is shown in **Fig. 9** in more detail.

The operating arm 2 further comprises a locking mechanism 5 such that movement about the joints 211, 231 can be locked. The locking mechanism 5 can be actuated by way of a handle 51.

**Figs. 2** and **3** show a side view and a front view of the mobile working machine 1. As can be seen in particular in Fig. 2, the operating arm 2 in the retracted configuration does not extend beyond a front side of the main body 11 of the mobile working machine 1, nor does it extend much beyond a rear side of the main body 11. Thereby, the mobile working machine 1 is compact and does not require much space during storage.

Depending on the embodiment, the mobile working machine 1 may comprise a pedestal attached to the rear side of the main body 11 such that an operator may stand on the pedestal during operation. The retracted configuration thereby allows for operation of the mobile working machine 1 with the operator standing on such a pedestal.

**Fig. 4** shows a perspective view of the operating arm 2 in the retracted configuration. The operating arm 2 is shown attached to the top part of the main body 11 of the mobile working machine (not shown).

The proximal member 21 is rotatably arranged on the top part of the main body 11 by way of a swivel 210. Preferably, neither the proximal member nor the swivel 210 extend substantially into the main body 11, rather they are attached to the main body by means of fasteners. To improve stability, a backing plate on the underside of the top part of the main body 11 may be provided such that the fasteners secure the swivel 210 to the top part. The swivel 210 has a vertical central axis, such that the proximal member 21 may rotate about the swivel 210 in the azimuthal (horizontal) plane.

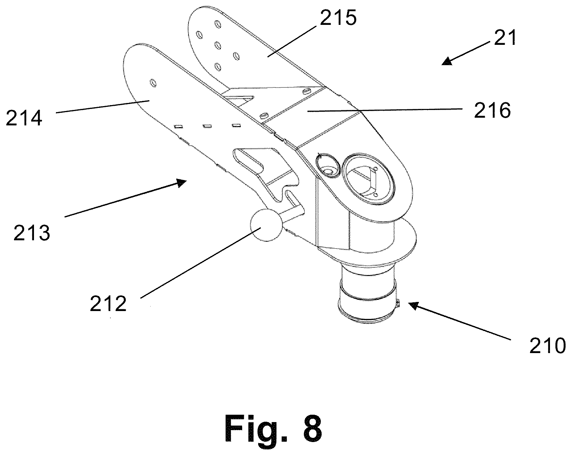

The proximal member 21 is a beam which extends from the swivel 210 to a proximal joint 211. Further details to the proximal member 21 are shown in **Fig. 8****.** The proximal member 21 ends at the proximal joint 211, which has a proximal rotation axis about which the link member 22 rotates. The proximal rotation axis is a horizontal (lateral) axis of rotation.

The link member 22 has an overall rectangular shape and extends from the proximal joint 211 to the distal joint 231 of the distal member 23. The link member 22 includes a locking mechanism 5 including a handle 51 by which the operator may lock or unlock the operating arm 2. What is meant is that by actuating the handle 51, the operating arm 2 may be moved from the retracted position R (shown) to the extended position E shown in Figs. 6 and 7. The operating arm 2 may be locked at any intermediate position between the retracted position R and the extended position E.

The link member 22 has a rectangular housing 222 which serves as a cover for the structural components of the link member 22.

The distal joint 231 is arranged parallel to the proximal joint 221 and has a distal rotation axis, which is also arranged horizontally. The motion of the distal member 23 about the distal joint 231 is coordinated with the motion of the link member 22 about the proximal member 21, such that the angle formed between the distal member 23 and the proximal member 21 remains constant.

The operating arm 2 may include a second handle (not shown) such that the distal member 23 may be rotated about the distal joint 231 without any rotation of the link member 22 about the proximal joint 211. Thereby, the tilt angle of the operating unit 3 connected to the distal member 23 may be adjusted.

The operating unit 3 comprises two handles 31A, 31B. Each handle includes a deadman switch such that if both handles are released, the mobile working machine 1 shuts down and stops moving. The operating unit 2 further includes a display unit 32.

**Fig. 5** shows a similar view of an operating arm 2 as **Fig. 4****,** however the housing 222 has been omitted to provide a view into the interior the link member 22. As shown, the link member 22 includes a structure with an overall substantially rectangular profile. The handle 51 is arranged on a lateral side of the link member 22. A coupling drive 223 extends from the handle 51 to the proximal joint 221 and the distal joint 223.

The operating arm 2 includes a locking mechanism by which the movement of the distal joint 231 and the proximal joint 211 may be locked and unlocked. The locking mechanism comprises a coupling in both the distal joint 231 and the proximal joint 211. The couplings are implemented as splined members which can engage at a plurality of defined positions, such that the operating arm 2 may be locked at a plurality of positions.

Operating the handle 51 causes the couplings of the joints 221, 231 to engage by way of an interconnected coupling drive 223 which operatively connects the handle 51 to the couplings of the joints 221, 231.

**Figs. 6** and **7** are analogous to Figs. 3 and 4, however show the operating arm 2 described above in the extended configuration E. As shown, the operating arm 2 in the extended position E is configured such that the operating unit 3 is lower than the proximal member 21.

**Fig. 8** shows a perspective view of the proximal member 21. The swivel 210 includes a vertically oriented cylindrical member which engages with a bearing (not shown) attached to the main body 11 of the mobile working machine 1 (not shown). The pivot may be locked and unlocked by way of a handle 212. By unlocking the swivel 210 using the handle 212, the operator may swivel the proximal member 21 (and thereby the entire operating arm 2) about the swivel 210.

Connected to the cylindrical member is the main section 213 of the proximal member 21. The proximal member 21 includes two side walls 214, 215 which are connected to the cylindrical member and extend to a distal end of the main section 213. The side walls 214, 215 have interconnected members 216 which thereby form a rigid structure. The distal end of the main section 213, between the two side walls 214, 215, is designed to receive the link member 22 (not shown), in particular designed to connect to the proximal joint 211 (not shown).

**Fig. 9** shows a perspective exploded view of a schematic drawing of the link member 22 of the operating arm 2, in particular showing details related to the coordination mechanism 4 and the locking mechanism 5.

The link member 22 includes an elongated structural beam with a rectangular cross-section. The beam is made of bent sheet metal. The beam includes two lateral walls extending along a central axis of the link member 22 between the proximal joint 211 and the distal joint 231. The lateral walls are interconnected by upper and lower walls, thereby forming a rigid load bearing structure. Cutouts in the walls are shown to reduce the overall weight and to allow access to the interior if needed.

The proximal and distal joints 211, 231 include a cylindrical axle including bearings such that when the link member 22 is attached to the proximal member 21 and the distal member 23 (not shown), rotation about the proximal member and the distal member 23 is enabled.

The movement of link member 22 about the joints 211, 231 is coordinated by way of a coordination mechanism 4 which includes two gears 41, 42 connected to the two cylindrical axles, respectively. The gear 41 is fixedly connected to the proximal member 21 (not shown) such that the gear 41 does not rotate with respect to the proximal member 21, but does rotate with respect to the link member 22. The gear 42 is fixedly connected to the distal member 23 (not shown) such that the gear 42 does not rotate with respect to the distal member 23, but does rotate with respect to the link member 22.

The gears 41, 42 include on an outer edge gear teeth which engage in a force locking manner with a chain 43 (part of the coordination mechanism 4) which loops around both gears 41, 42. The chain 43 together with the gears 41, 42 forms a traction drive, in particular a chain drive. The chain 43 ensures that any rotational motion (i.e. torque) of the link member 22 about the distal member 23, which causes a rotation of the gear 42 relative to the link member 22, is also transferred to the gear 41, causing a rotation of the link member 22 with respect to the proximal member 21.

The gears 41, 42 further include, on an inner face, a first and second coupling, respectively, in the form of engagement members (in this case implemented using axial splines). This couplings are part of the locking mechanism 5. By actuating the handle 51, a coupling drive 52 in the form of a rod engages with wedge elements 53, 54 which causes the first and second coupling to positively engage with a coupling counterpart (not shown) such that the rotation of the gears 41, 42 with respect to the link member 22 is arrested (i.e. stopped). Thereby, the operator may, during operation, use the handle to unlock the locking mechanism 5 to adjust the operating arm 2, then lock the operating arm 2 again to prevent undesired movement.

The link member 22 further includes a housing 222A, 222B including an upper housing 222A and a lower housing 222B which are secured to the beam, thereby covering the beam and the coordination mechanism 4.

The link member 22 further includes electrical cabling (not shown) which may run through the middle part of the beam at least partially, or be attached to the outer side of the beam and covered by the housing 222. The electrical cabling connects the operating unit (not shown) with the main body of the mobile working machine.

The above-described embodiments of the disclosure are exemplary and the person skilled in the art knows that at least some of the components and/or steps described in the embodiments above may be rearranged, omitted, or introduced into other embodiments without deviating from the scope of the present disclosure.

## Claims

1. A mobile working machine (1) comprising an operating arm (2) comprising:
a proximal member (21) attached to the mobile working machine (1);
a distal member (23) attached to an operating unit (2) for the mobile working machine (1);
a link member (22) arranged between the proximal member (21) and the distal member (23), rotatably connected to the proximal member (21) by a proximal joint (211) and the distal member (23) by a distal joint (231); and
a coordination mechanism (4) configured such that the rotation of the proximal member (21) with respect to the link member (22) around the proximal joint (211) and the rotation of the distal member (23) with respect to the link member (22) around the distal joint (231) are coordinated to each other.

2. The mobile working machine (1) according to any one of the preceding claims, wherein the operating arm (2) further comprises a locking mechanism (5) to temporarily lock the proximal member (21) about the proximal joint (211) and the rotation of the distal member (23) about the distal joint (231) is lockable in several angular positions.

3. The mobile working machine (1) according to any one of the preceding claims, wherein the coordination mechanism (4) includes a force accumulator configured to compensate at least partially a weight that the operating unit (3) transfers to a user during operation.

4. The mobile working machine (1) according to any one of the preceding claims, wherein the coordination mechanism (4) comprises a drive mechanism connected to the proximal member (21) and the distal member (23), the drive mechanism configured to transfer torque about the link member (22) between the proximal member (21) and the distal member (23).

5. The mobile working machine (1) according to any one of the preceding claims, wherein the traction drive extends on the outside or on the inside along the link member (22) interconnecting the proximal gear and the distal gear.

6. The mobile working machine (1) according to any one of the preceding claims, wherein the link member (22) at least partially defines an enclosure (222) and the traction drive is at least partially arranged inside the enclosure (222).

7. The mobile working machine (1) according to any one of the preceding claims, wherein the link member (22) includes a beam extending between a first end of the link member and a second end of the link member (22), the beam at least partially defining the enclosure (222).

8. The mobile working machine (1) according to any one of the preceding claims, wherein the distal joint (231) has a distal rotation axis and the proximal joint (211) has a proximal rotation axis, the distal rotation axis and the proximal rotation axis arranged parallel to each other.

9. The mobile working machine (1) according to any one of the preceding claims, wherein the coordination mechanism (4) comprises a traction drive, in particular force-locking and/or positive locking traction drives, in particular chain drives or toothed belt drives.

10. The mobile working machine (1) according to any one of the preceding claims, wherein the traction drive comprises a proximal gear (41) attached to the proximal member (21) and a distal gear (42) attached to the distal member (23), the proximal gear (41) and the distal gear (42) interconnected to each other by the traction drive.

11. The mobile working machine (1) according to any one of the preceding claims, wherein the locking mechanism (5) comprises a handle (51) movable between an unlocked position and a locked position, the handle (51) configured to engage with the locking mechanism (5) to set the locking mechanism (5) in the unlocked setting and the locked setting, respectively.

12. The mobile working machine (1) according to any one of the preceding claims, wherein the locking mechanism (5) comprises a coupling configured to lock the rotation of the proximal member (21) with respect to the link member (22) and/or configured to lock the rotation of the proximal member (21) with respect to the link member,

13. The mobile working machine (1) according to any one of the preceding claims, wherein the locking mechanism (5) coordinates the action of the first and the second coupling using a coupling drive (52) connected to the handle (51).

14. The mobile working machine (1) according to any one of the preceding claims, wherein the proximal member (21) comprises a swivel (210) such that the proximal member (21), when attached to the mobile working machine (1), may be swiveled through a defined angular range of at least 180°, preferably 270°, more preferably 360°.

15. The mobile working machine (1) according to any one of the preceding claims, wherein electrical cabling for controlling the mobile working machine (1) is arranged at least partially inside the operating arm (2), in particular wherein the electrical cabling runs along the inside of the link member (22).
